# EUROPÄISCHE PATENTSCHRIFT

(11) **EP 3 363 405 B1**
(45) Veröffentlichungstag und Bekanntmachung des Hinweises auf die Patenterteilung: **11.08.2021**
(21) Anmeldenummer: 18157166.2
(22) Anmeldetag: 16.02.2018
(51) Int. Cl.: A61C 7/08

(54) **KIEFERORTHOPÄDISCHE ZAHNSTELLUNGSREGULIERUNGSANORDNUNG**
ORTHODONTIC TOOTH POSITION REGULATION ARRANGEMENT
ARRANGEMENT DE RÉGLAGE ORTHODONTIQUE DE LA POSITION DES DENTS

(30) Priorität: 17.02.2017 DE 102017000134
(43) Veröffentlichungstag der Anmeldung: 22.08.2018
(73) Patentinhaber: Pouran, Vali-Pursche, 40670 Meerbusch (DE)
(72) Erfinder: Pouran, Vali-Pursche, 40670 Meerbusch (DE)
(74) Vertreter: Haverkamp, Jens

(56) Entgegenhaltungen:
- WO-A1-2017/006177
- KR-B1- 101 579 455
- US-A1- 2009 191 502

## Beschreibung

Gegenstand der Erfindung ist eine kieferorthopädische Zahnstellungsregulierungsanordung.

Zur kieferorthopädischen Zahnstellungsregulierung werden unter anderem Zahnschienen eingesetzt, die aus einem dünnen Kunststoffmaterial hergestellt, typischerweise farblos sind und daher, ohne in besonderem Maße in Erscheinung zu treten, ganztägig getragen werden können. Derartige Zahnschienen werden auch als Aligner-Schienen angesprochen. Die Innenseite der Schiene stellt das Negativ derjenigen Zahnreihe dar, auf den die Zahnschiene aufzusetzen ist. Hierbei kann es sich um mehrere, nebeneinanderliegende Zähne des Zahnbogens oder um einen gesamten Zahnbogen handeln. Ausgehend von der aktuellen Zahnstellung für die vorgesehene Zahnstellungsregulierung wird ermittelt, welcher Zahn oder welche Zähen verstellt werden müssen. Insofern wird eine Zielzahnstellung der Zähne der Zahnreihe moduliert, um im Vergleich zu der aktuellen Zahnstellung der Zähne der Zahnreihe zu bestimmten, welche Zähne für die Zahnstellungsregulierung in welche Richtung bewegt bzw. verstellt werden müssen. Die Verstell- bzw. Bewegungsrichtung eines Zahns als Raumvektors definiert. Die Innenseite der Zahnschiene mit ihren Taschen zur Aufnahme jeweils eines Zahns wird unter Berücksichtigung der Bewegungsvektoren mit Druckpunkten an denjenigen Stellen ausgerüstet, an denen die Kraft für die vorgesehene Verstellung eines Zahns in diesen eingeleitet werden soll. Diese Druckpunkte sind noppenartige Erhöhungen, die von der Innenseite einer Tasche der Zahnschiene hervorstehen. Letztendlich handelt es sich bei diesen noppenartigen Erhöhungen um Vorsprünge aus dem Material der Zahnschiene.

Für die Zahnstellungsregulierung kann der gewünschte Verstellbetrag des oder der Zähne, der durch die Höhe eines solchen von der Innenseite der Zahnschiene abragenden Vorsprunges bestimmt ist, nicht mit einer einzigen Zahnschiene verwirklicht werden, da dann der auf einen solchen Zahn wirkende Druck zu groß wäre, was wiederum den Tragekomfort beeinträchtigt. Aus diesem Grunde werden für eine Zahnstellungsregulierung mit dieser Methode eine Reihe von Zahnschienen angefertigt, bei denen die Höhe der noppenartigen Druckpunkte von anfänglich geringer Höhe bis zur Zielhöhe in den einzelnen Zahnschienen zunimmt. Jede Zahnschiene wird von dem Patienten solange getragen, bis der Zahn in dem gewünschten Maße verstellt ist. Dann wechselt man auf die Zahnschiene mit dem oder den nächsthöheren Druckpunkten.

Eine solche kieferorthopädische Zahnstellungsregulierung ist für den Patienten nicht unangenehm, kann ganztägig getragen werden und hat nicht die Nachteile festsitzender Zahnstellungsregulierungssysteme. Nachteilig ist bei solchen kieferorthopädischen Zahnstellungsregulierungen jedoch, dass die für eine Zahnverstellung einzubringende Kraft nicht immer exakt an derjenigen Stelle eingeleitet werden kann, wo diese für die Korrektur der Zahnstellung eingeleitet werden soll. Überdies wird es mitunter als aufwendig und kostenträchtig angesehen, dass für eine Zahnstellungsregulierung eine Vielzahl von Zahnschienen mit unterschiedlicher Höhe ihrer Druckpunkte benötigt werden.

Aus KR 101 579 455 B1 ist ein transparentes Zahnstellungsregulierungssystem bekannt, welches sich durch hohen Tragekomfort auszeichnet und dauerhaft punktuell Kraft auf die Zähne ausübt, um die gewünschte Zahnstellungsregulierung vornehmen zu können. Um dieses zu erreichen, werden in die Wandung der Schiene Druckkörper eingesetzt.

Aus US 2009/0191502 A1 ist eine Methode und ein System zur kieferorthopädischen Zahnstellungsregulierung bekannt, wobei eine Zahnschiene mit einzelnen Taschen verwendet wird, welche Taschen über eine spezielle Formgebung, wie beispielsweise Vorsprünge, verfügen, die Kraft auf die zu verstellenden Zähne ausüben.

In WO 2017/006177 A1 ist eine Zweifach-Zahnschiene offenbart, bei welcher eine zweite Zahnschiene die erste Zahnschiene teilweise aufnimmt und in Kombination mit dieser eine Zahnstellungsregulierung herbeiführt. Ausgehend von diesem diskutierten Stand der Technik liegt der Erfindung daher die Aufgabe zu Grunde eine kieferorthopädische Zahnstellungsregulierungsanordung der eingangs genannten Art dergestalt weiterzubilden, dass mit dieser nicht nur eine Kraft für die gewünschte Zahnverstellung auch an Stellen in einem Zahn eingeleitet werden kann, die mit einem Druckpunkt einer herkömmlichen Zahnschiene der in Rede stehenden Art nicht erreichbar waren und/oder die weniger aufwendig ist.

Gelöst wird diese Aufgabe erfindungsgemäß durch eine kieferorthopädische Zahnstellungsregulierungsanordnung mit den Merkmalen des Anspruchs 1.

Bei dieser kieferorthopädischen Zahnstellungsregulierungsanordnung sind zur Krafteinleitung an den zuvor für die Zahnverstellung erforderlichen Druckpunkten der Zähne einer Zahnreihe Druckpunktattachments kraftschlüssig befestigt, typischerweise unter Verwendung eines Klebers oder Zementes aufgeklebt oder auch aus einem solchen Material am Zahn unmittelbar moduliert. Die Zahnschiene, deren Taschen aufweisende Innenseite das Negativ zu der aktuellen Stellung der Zahnreihe bildet, und zwar ohne Berücksichtigung des oder der an dem oder den Zähnen der Zahnreihe befestigten Druckpunktattachments wirkt sodann unter Vorspannung stehend auf das oder die Druckpunktattachments. Allein durch Ändern der Aufbauhöhe des oder der Druckpunktattachments kann die auf den Zahn wirkende Vorspannung - die Druckkraft - eingerichtet werden, ohne das hierfür eine neue Zahnschiene benötigt werden würde. Bei Zahnstellungskorrekturen geringeren Ausmaßes kann die Zahnstellungsregulierung mitunter mit einer einzigen Zahnschiene vorgenommen werden. Bei aufwendigeren Zahnstellungskorrekturen oder solchen, bei denen ein oder mehrere Zähne über einen größeren Betrag zu verstellen sind, wird man nach einer ersten Korrekturphase in aller Regel eine zweite Zahnschiene anfertigen, deren Innenseite dann wiederum das Negativ zu der Zahnstellung der Zahnreihe nach der ersten Korrekturphase entspricht. Dieses ist vorteilhaft, da die Zahnschiene dann an die aktuelle Zahnstellung optimal angepasst ist.

Vorteilhaft bei dieser kieferorthopädischen Zahnstellungsregulierungsanordung ist, dass der Druckpunkt für die Krafteinleitung zur Zahnverstellung immer an ein und derselben Stelle verbleibt. Da die Zahnschienen aus einem Kunststoffmaterial mit gewissen elastischen Materialeigenschaften hergestellt sind, war dieses bei herkömmlichen Zahnschienen nicht immer der Fall, da sich die an der Innenseite der Zahnschiene angeformten Druckpunkte beispielsweise bei kauenden oder zahnknirschenden Bewegungen bewegt haben mit der Folge, dass dann auch der Druckpunkt von dem vorbestimmten Druckpunkt weggewandert ist. Bei diesem kieferorthopädischen Zahnstellungsregulierungskonzept kann eine Druckkraft für die Zahnverstellung zudem auch an solchen Stellen in den Zahn mithinreichender Kraft eingeleitet werden, die mit herkömmlichen Zahnschienen nicht, zumindest nicht in hinreichendem Maße erreichbar waren. Hierbei handelt es sich beispielsweise um die mesio- und distobukkalen sowie mesio- und distoverstibulären Zahnbereiche ebenso wie die Möglichkeit des Anordnens der Attachments im palatinalen und lingualen Zahnbereich.

Eine solche Zahnschiene ist gemäß einer Ausgestaltung aus einem gewisse elastische Eigenschaften aufweisenden Polyurethanmaterial hergestellt. Eingesetzt werden kann dasselbe Material, wie dieses herkömmlich für Aligner-Schienen verwendet wird.

Auf die Zahnstellungsregulierungsanordung kann auch durch die Wahl der Geometrie der Druckpunktattachments Einfluss genommen werden. Derartige Druckpunktattachments können beispielsweise kleine Plättchen sein. Diese können auch eine noppenartige oder eine andere Geometrie aufweisen. Bei einem Einsatz von stapelbaren, also: aufeinander aufbaubaren Druckpunkt-attachments, wie beispielsweise kleine Plättchen, kann die Höhe individuell und dem gewünschten Verstellbetrag entsprechend ausgelegt werden. Nach einer ersten Zahnstellungskorrektur kann beispielsweise auf ein erstes solches Attachment zum Vergrößern der Höhe dieses Druckpunkt-attachments ein weiteres Plättchen aufgeklebt werden. Nach Abschluss der Behandlung werden diese von dem Zahn beispielsweise durch Schleifen entfernt.

Vorteilhaft bei der vorbeschriebenen kieferorthopädischen Zahnstellungsregulierungsanordung ist auch, dass die Druckpunktattachments aus einem anderen Material hergestellt sind, als die Zahnschiene. Die Druckpunktattachments sind starre, unelastische Körper, sodass die durch die Zahnschiene darauf wirkende Vorspannungskraft (Druckkraft) insgesamt für die Zahnregulierung genutzt wird und nicht in eine Teilverformung der aus dem Material der Schiene gefertigten Druckpunktvorsprünge.

Mit diesem vorbeschriebenen Konzept ist es insbesondere möglich, eine Zahnverstellung vorzunehmen, ohne dass eine Zahnkippung eintritt, mithin der oder die zu verstellenden Zähne in ihrer aktuellen Ausrichtung verstellt werden. In einem solchen Fall werden an jedem zu verstellenden Zahn an den lingualen und bukkalen approximalen Zahnflächen jeweils zumindest ein Druckpunktattachment befestigt. Typischerweise sind bei einer solchen Behandlung mehrere Zähne zu verstellen, so dass dann diejenigen Zähne, die in distaler Richtung zu verschieben sind, jeweils lingual und bukkal an ihren Approximalflächen ein solches Druckpunktattachment tragen.

Nachfolgend ist die Erfindung anhand eines Ausführungsbeispiels unter Bezugnahme auf die beigefügten Figuren beschrieben. Es zeigen:
- **Fig. 1**:: Eine schematische Draufsicht auf eine Hälfte eines Zahnbogens,
- **Fig. 2:**: einzelne Zähne der Zahnreihe der Figur 1 mit daran angebrachten Druckpunktattachments,
- **Fig. 3:**: einen schematisierten Schnitt durch einen ein solches Druckpunktattachment tragenden Zahns der Figur 2 entlang der Linie A-B,
- **Fig. 4:**: den Schnitt des Zahns der Figur 3 mit einer auf die Zahnreihe aufgesetzten Zahnschiene und
- **Fig. 5:**: eine schematisierte Draufsicht auf eine Hälfte eines Zahnbogens, mit an einigen Zähnen dieser Zahnreihe angebrachten Druckpunktattachments zum distalen Verschieben dieser Zähne.

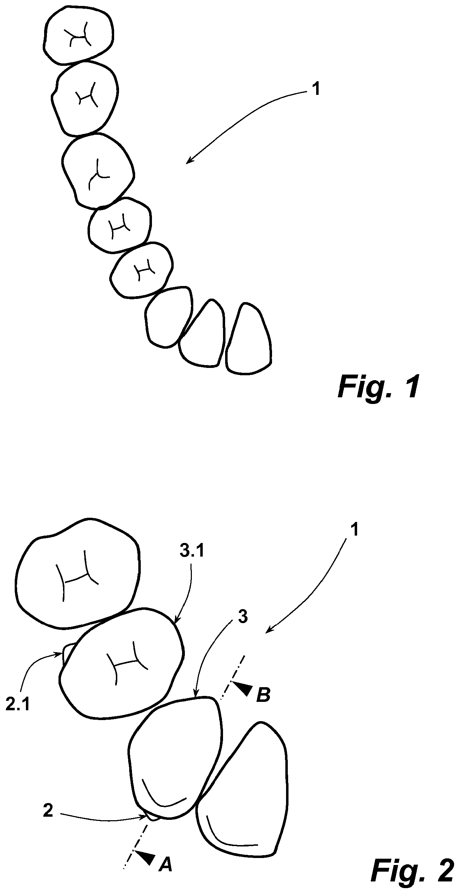

Figur 1 zeigt beispielhaft eine Reihe von nebeneinanderliegenden Zähnen - eine eine Zahnreihe 1 -, die bei dem dargestellten Ausführungsbeispiel ein halber Zahnbogen ist. Die Zahnstellung von einigen Zähnen dieser Zahnreihe 1 soll korrigiert werden. In einem ersten Schritt wird hierzu die aktuelle Zahnstellung in der Zahnreihe 1 aufgenommen und ermittelt, welche Zähne für die gewünschte Zahnstellungsregulierung in welche Richtung verstellt werden müssen. Die Verstellrichtung wird als Richtungsvektor im Raum definiert und bezüglich der zu verstellenden Zähnen wird derjenige Druckpunkt oder es werden diejenigen Druckpunkte bestimmt, an dem oder den für die gewünschte Zahnregulierung eine Druckkraft eingeleitet werden soll. An den auf diese Weise bestimmten Druckpunkten wird an dem oder den Zähnen ein Druckpunktattachment 2, 2.1 kraftschlüssig angebracht, wie dieses in Figur 2 an den Zähnen 3, 3.1 beispielhaft gezeigt ist. Derartige Druckpunktattachments können an beliebiger Stelle an der Außenseite eines Zahns angeordnet sein. Ebenfalls besteht die Möglichkeit, durch ein solches Druckpunktattachment für die Zahnstellungsregulierung zwei Zähne miteinander zu verbinden, sodass beide Zähne entsprechend der Auslegung des Druckpunktattachments zusammen verstellt werden. Bei dem dargestellten Ausführungsbeispiel sind die Druckpunktattachments 2, 2.1 noppenartig ausgebildet. Es versteht sich, dass diese auch andere Formen aufweisen können. Bei den Druckpunktattachments handelt es sich um Druckpunktattachments aus einem nicht elastischen Material. Bei dem dargestellten Ausführungsbeispiel sind die Druckpunktattachments 2, 2.1 aus einem Keramikmaterial hergestellt.

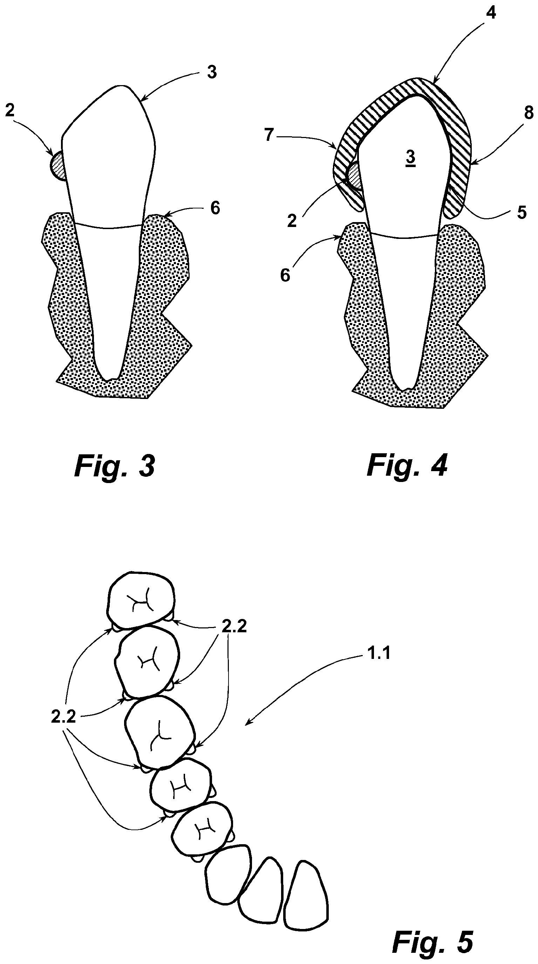

Figur 3 zeigt beispielhaft den Zahn 3 in einer Seitenansicht, in der der Kieferbereich und das Druckpunktattachment 2 im Schnitt gezeigt sind.

Die eigentliche Zahnregulierung erfolgt mit einer Zahnschiene 4 aus einem Kunststoffmaterial mit elastischen Eigenschaften, um diese über den größten Durchmesser der Zähne der Zahnreihe 1 bringen zu können. Die Zahnschiene 4 ist aus einem durchsichtigen Kunststoff, bei dem dargestellten Ausführungsbeispiel aus einem geeigneten Polyurethan, hergestellt. Die Elastizität der Zahnschiene 4 ist so ausgelegt, dass diese über die Ausbuchung der Zahnkrone (bei den Backenzähnen) mit ihren Seitenwänden hinweggeführt werden kann. Die Innenseite der Zahnschiene 4 - diejenige Seite, die zu der Zahnreihe 1 weist -, ist als Negativ zu der Zahnreihe 1 gefertigt. Jedem Zahn der Zahnreihe 1 ist somit eine Tasche an der Innenseite der Zahnschiene 4 zugeordnet. In Figur 4 ist die den Zahn 3 aufnehmende Tasche mit dem Bezugszeichen 5 kenntlich gemacht. Die Zahnschiene 4 erstreckt sich bei dem dargestellten Ausführungsbeispiel bis kurz vor den Kiefer 6 und überspannt mit seiner labialen Seitenwand 7 das Druckpunktattachment 2. Da die Seitenwand 7 der Kontur des Zahns 3 ohne Attachment folgend gefertigt ist, und somit ohne das Druckpunktattachment 2 an der labialen Außenseite des Zahns 3 anliegen würde, liegt der über das Druckpunktattachment 2 gespannte Abschnitt der Seitenwand 7 an dem Druckpunktattachment aufgrund der durch die Materialelastizität der Seitenwand 7 bzw. der Zahnschiene 4 eingebrachten Vorspannung unter einer Vorspannung an. Das Widerlager wird durch die palatinale Seitenwand 8 bereitgestellt, die an der palatinalen Seite des Zahns 3 anliegt. Aufgrund seiner elastischen Materialeigenschaften kann die Zahnschiene 4 ohne Weiteres auf die Zahnreihe 1 aufgesetzt und von dieser abgenommen werden.

Da das Druckpunktattachment 2 kraftschlüssig an den Zahn 3 angeschlossen ist, wirkt die durch die Zahnschiene 4 bereitgestellte Vorspannung auf dieses Druckpunktattachment 2 unabhängig davon, ob die Zahnschiene 4 sich in ihrer in Figur 4 gezeigten Stellung befindet oder aufgrund etwa von Kau- oder Knirschbewegungen gegenüber dieser Stellung verstellt wird.

Bei dieser kieferorthopädischen Zahnstellungsregulierungsanordnung kann durch die äußere Formgebung des oder der Druckpunktattachments 2, 2.1 nicht nur über die in den Zahn 3, 3.1 eingekoppelte Kraft Einfluss genommen werden, sondern auch in Bezug auf die eingekoppelte Kraftrichtung. Durch die Zahnschiene 4 bzw. deren Seitenwände 7, 8 wird grundsätzlich eine in Richtung zu dem Zentrum der Ebene der Zahnreihe 1 wirkende Kraft bereitgestellt. Ein solches Druckpunktattachment kann durch entsprechende Auslegung seiner in Kontakt mit der Innenseite der Zahnschiene gelangenden Oberfläche, beispielsweise durch eine entsprechend ausgelegte Schräge eine Kraftumlenkung bewirken, und zwar in einem anderen Ausmaß als dieses mit an der Innenseite der Zahnschiene angeformten Druckpunkten gemäß dem Stand der Technik möglich ist. Auf diese Weise kann eine Krafteinleitung auch in anderen Richtungen erfolgen.

Während bei dem vorbeschriebenen Ausführungsbeispiel durch die Druckpunktattachments eine Zahnverkippung oder Zahndrehung erreicht wird, kann eine Zahnverstellung unter Verwendung derartiger Druckpunktattachments auch vorgenommen werden, bei der ein oder mehrere in einer Zahnreihe nebeneinander angeordnete Zähne insgesamt, verstellt bzw. verschoben werden und zwar ohne ihre Raumlage in nennenswerte Maße zu ändern.

Figur 5 zeigt ein Ausführungsbeispiel anhand eines Zahnbogens 1.1, bei dem mehrere Backenzähne in distaler Richtung verstellt werden sollen. An den fünf gezeigten Backenzähnen sind sowohl lingual als auch bukkal an ihren jeweiligen Approximalflächen jeweils ein Druckpunktattachment 2.2 befestigt. Dieses bewirkt, dass diese Zähne beim Tragen der Zahnschiene insgesamt in distaler Richtung verstellt werden. Die Druckpunktattachments 2.2 sind an denjenigen Stellen angeordnet, die zuvor zum derartigen Verstellen jedes Zahnes erforderlichen Raumvektoren sich befinden. Somit dient das an der jeweils anderen Seite angebrachte Druckpunktattachment als Ausgleich bzw. Widerlager für das andere Druckpunktattachment, so dass in Folge der darauf wirkenden, zuvor ermittelten Druckspannung die gewünschte Zahnverstellung erfolgt. Ein solcher Vorgang kann durchaus auch mit einer gewissen Zahndrehung um seine Längsachse gekoppelt sein, sollte dieses gewünscht sein. In einem solchen Fall würde auf derjenigen Zahnseite ein höheres Druckpunktattachment anzubringen sein, von der das Drehmoment eingeleitet werden soll. Das Drehmoment wird als vektorieller Anteil der anliegenden Druckspannung eingeleitet.

Die vorstehend beschriebenen Ausführungsbeispiele sind als solche zu verstehen. Durchaus ist es möglich, dass an jedem Zahn einer Zahnreihe ein oder mehrere Druckpunktattachments angebracht sind.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, die Erfindung umsetzen zu können, ohne dass dieses im Rahmen dieser Ausführung näher dargelegt werden müsste.

### Bezugszeichenliste

- 1, 1.1: Zahnreihe
- 2, 2.1, 2.2: Druckpunktattachment
- 3, 3.1: Zahn
- 4: Zahnschiene
- 5: Tasche
- 6: Kiefer
- 7: Seitenwand
- 8: Seitenwand

## Patentansprüche

1. Kieferorthopädische Zahnstellungsregulierungsanordnung mit einer auf eine Zahnreihe (1) aufsetzbaren und von dieser abnehmbaren, auf ihrer Innenseite einzelne Taschen (5) zur Aufnahme jeweils eines Zahns (3, 3.1) aufweisenden Zahnschiene (4) aus einem elastischen Kunststoffmaterial, wobei die Zahnstellungsregulierungsanordnung derart ausgebildet ist, dass durch die Zahnschiene (4), wenn auf die Zahnreihe (1) aufgesetzt, punktuell durch zumindest einen Druckpunkt Kraft in wenigstens einen in der Zahnschiene (4) aufgenommenen Zahn (3, 3.1) eingeleitet werden kann, wobei die Zahnstellungsregulierungsanordnung zumindest ein Druckpunktattachment (2, 2.1) umfasst, das an dem zumindest einen in die Zahnschiene (4) aufgenommenen Zahn (3, 3.1) an der oder den zuvor als Druckpunkt für die Zahnregulierung bestimmten Stellen kraftschlüssig derart befestigbar ist, dass die Zahnschiene (4) mit ihrer Innenseite zum Zwecke einer punktuellen Krafteinleitung unter Vorspannung stehend gegen das Druckpunktattachment (2, 2.1) wirken kann, **dadurch gekennzeichnet, dass** die Innenseite der Zahnschiene (4) die Negativstruktur der Zahnreihe (1) bildet, bevor das zumindest eine Druckpunktattachment (2, 2.1, 2.2) an dem zumindest einen Zahn (3, 3.1) der Zahnreihe (1) befestigt ist.

2. Kieferorthopädische Zahnstellungsregulierungsanordnung nach Anspruch 1, **dadurch gekennzeichnet, dass** das zumindest eine Druckpunktattachment (2, 2.1, 2.2) an der vorbestimmten Druckpunktstelle eines Zahns (3, 3.1) an diesem mittels eines Klebers, eines Zementes oder dergleichen befestigbar ist.

3. Kieferorthopädische Zahnstellungsregulierungsanordnung nach Anspruch 1 oder 2, **dadurch gekennzeichnet, dass** das zumindest eine Druckpunktattachment (2, 2.1, 2.2) derart an dem Zahn (3, 3.1) anbringbar ist, dass eine Kontaktfläche zu dem Zahn (3, 3.1) weist und an einem Oberflächenbereich die Innenseite der den Zahn (3, 3.1) mit dem Druckpunktattachment (2, 2.1, 2.2) aufnehmenden Tasche (5) der Zahnschiene (4) unter Vorspannung anliegen kann.

4. Kieferorthopädische Zahnstellungsregulierungsanordnung nach einem der Ansprüche 1 bis 3, **dadurch gekennzeichnet, dass** ein Druckpunktattachment (2, 2.1, 2.2) eine halbkugelförmige Form aufweist.

5. Kieferorthopädische Zahnstellungsregulierungsanordnung nach einem der Ansprüche 1 bis 3, **dadurch gekennzeichnet, dass** ein Druckpunktattachment eine von einer rotationssymmetrischen Grundfläche unterschiedliche Grundfläche aufweist.

6. Kieferorthopädische Zahnstellungsregulierungsanordnung nach einem der Ansprüche 1 bis 5, **dadurch gekennzeichnet, dass** das zumindest eine Druckpunktattachment ein Kunststoffteil ist.

7. Kieferorthopädische Zahnstellungsregulierungsanordnung nach einem der Ansprüche 1 bis 5, **dadurch gekennzeichnet, dass** das zumindest eine Druckpunktattachment (2, 2.1, 2.2) ein Keramikteil ist.

## Claims

1. Orthodontic tooth position regulation arrangement with a tooth rail (4), which can be placed on a row of teeth (1) and removed from it, and comprising on its inner side individual pockets (5), each for receiving a tooth (3, 3.1), with an elastic plastic material, wherein the tooth position regulation arrangement is configured in such a way that, when the tooth rail (4) is placed on the row of teeth (1), force can be applied on specific points by at least one pressure point onto at least one of the teeth (3, 3.1) received in the tooth rail (4), wherein the tooth position regulation arrangement comprises at least one pressure point attachment (2, 2.1), which can be secured in non-positive fit to the at least one tooth (3, 3.1) which is received in the tooth rail (4) at the point(s) determined beforehand as a pressure point for the tooth regulation, in such a way that the tooth rail (4) can take effect with its inner side for the purpose of applying force at a specific point, held under preliminary tension against the pressure point attachment (2, 2.1), **characterised in that** the inner side of the tooth rail (4) forms a negative structure of the row of teeth (1) before the at least one pressure point attachment (2, 2.1, 2.2) is secured to the at least one tooth (3, 3.1) of the row of teeth (1).

2. Orthodontic tooth position regulation arrangement according to claim 1, **characterised in that** the at least one pressure point attachment (2, 2.1, 2.2) at the predetermined pressure point (3, 3.1) can be secured to this by means of an adhesive, a cement, or the like.

3. Orthodontic tooth position regulation arrangement according to claim 1 or 2, **characterised in that** the at least one pressure point attachment (2, 2.1, 2.2) can be applied to the tooth (3, 3.1) in such a way that a contact surface to the tooth (3, 3.1) is provided, and that, at one surface region, the inner side of the pocket (5) of the tooth rail (4), which receives the tooth (3, 3.1) with the pressure point attachment (2, 2.1, 2.2), can be in contact under preliminary tension.

4. Orthodontic tooth position regulation arrangement according to any one of claims 1 to 3, **characterised in that** a pressure point attachment (2, 2.1, 2.2) exhibits a hemispherical shape.

5. Orthodontic tooth position regulation arrangement according to any one of claims 1 to 3, **characterised in that** a pressure point attachment comprises a base surface which differs from a rotationally symmetrical base surface.

6. Orthodontic tooth position regulation arrangement according to any one of claims 1 to 5, **characterised in that** the at least one pressure point attachment is a plastic component,

7. Orthodontic tooth position regulation arrangement according to any one of claims 1 to 5, **characterised in that** the at least one pressure point attachment (2, 2.1, 2.2) is a ceramic component.

## Revendications

1. Arrangement de réglage orthodontique de la position des dents comportant une gouttière (4) à placer sur une rangée (1) de dents et qui peut en être retirée, présentant sur sa face intérieure des poches (5) unitaires destinées à y loger une dent (3, 3.1), composée d'un matériau plastique élastique, l'arrangement de réglage orthodontique de la position des dents étant conformé de telle sorte que la gouttière (4), quand elle est placée sur une rangée (1) de dents, peut exercer ponctuellement, au moyen d'au moins un point de pression, un effort sur au moins une des dents (3, 3.1) logée dans la gouttière (4), l'arrangement de réglage orthodontique de la position des dents comportant au moins une attache (2, 2.1) de point de pression, laquelle est maintenue mécaniquement sur au moins une dent (3, 3.1) logée dans la gouttière (4) à un ou plusieurs endroits définis au préalable en tant que point de pression pour le réglage de la position des dents, de telle sorte que la gouttière (4) peut agir par sa face intérieure, afin d'exercer un effort ponctuel, en étant mise en pré-tension, sur l'attache (2, 2.1) de point de pression, **caractérisé en ce que** la face intérieure de la gouttière (4) forme la structure négative de la rangée de dents (1), antérieurement à la fixation de l'au moins une attache (2, 2.1, 2.2) de point de pression sur l'au moins une dent (3, 3.1) de la rangée (1) de dents.

2. Arrangement de réglage orthodontique de la position des dents selon la revendication 1, **caractérisé en ce que** l'au moins une attache (2, 2.1, 2.2) de point de pression peut être fixée à l'endroit de point de pression préalablement défini d'une dent (3, 3.1), sur celle-ci, à l'aide d'une colle, d'un ciment ou similaire.

3. Arrangement de réglage orthodontique de la position des dents selon la revendication 1 ou 2, **caractérisé en ce que** l'au moins une attache (2, 2.1, 2.2) peut être fixée sur une dent (3, 3.1) de telle sorte qu'une surface de contact est orientée vers la dent (3, 3.1) et que la face intérieure de la poche (5) de la gouttière (4), dans laquelle est logée la dent (3, 3.1) avec l'attache (2, 2.1, 2.2) de point de pression, peut être en appui sous pré-tension contre une zone de surface.

4. Arrangement de réglage orthodontique de la position des dents selon l'une des revendications 1 à 3, **caractérisé en ce qu'**une attache (2, 2.1, 2.2) de point de pression présente une forme demi-sphérique.

5. Arrangement de réglage orthodontique de la position des dents selon l'une des revendications 1 à 3, **caractérisé en ce qu'**une attache de point de pression présente une surface de base différente d'une surface de base symétrique en rotation.

6. Arrangement de réglage orthodontique de la position des dents selon l'une des revendications 1 à 5, **caractérisé en ce que** l'au moins une attache de point de pression est une pièce en matière plastique.

7. Arrangement de réglage orthodontique de la position des dents selon l'une des revendications 1 à 5, **caractérisé en ce que** l'au moins une attache (2, 2.1, 2.2) de point de pression est une pièce en céramique.
